# FASCICULE DE BREVET EUROPEEN

(11) **EP 2 298 596 B1**
(45) Date de publication et mention de la délivrance du brevet: **14.11.2018**
(21) Numéro de dépôt: 09075427.6
(22) Date de dépôt: 16.09.2009
(51) Int. Cl.: B60P 1/64, B60P 1/00, B60P 1/28

(54) **Accouplement d'équipements pour un véhicule utilitaire**
Kupplung für Zusatzgeräte eines Nutzfahrzeugs
Equipment coupling for a commercial vehicle

(43) Date de publication de la demande: 23.03.2011
(73) Titulaire: Nilfisk A/S, 2605 Brøndby (DK)
(72) Inventeur: Cotting, André Claude, 1752 Villars-sur-Glâne (CH)
(74) Mandataire: Burkard, Thierry

(56) Documents cités:
- WO-A1-97/31801
- DE-A1- 4 214 932
- FR-A1- 2 836 109
- FR-A5- 2 049 440

## Description

Notre invention concerne le domaine des véhicules utilitaires, en particulier destinés à l'entretien des voiries, comportant des moyens pour effectuer de manière sûre et rapide la dépose des équipements utilisés pour effectuer le traitement des déchets de voirie, par exemple le transport, le nettoyage, le lavage ou la collecte.

Plus particulièrement, l'invention concerne les moyens permettant de réaliser l'accouplement d'équipements divers au véhicule.

Le document FR 2 049 440 A5 divulgue le préambule de la revendication 1.

Les véhicules utilitaires traditionnels comportent pour l'essentiel une cabine disposée à l'avant d'un châssis, souvent articulé. Ce châssis reçoit en dessous d'une part les moyens de traitement, par exemple des brosses ou des jets pour asperger, des unités d'arrosage, de tonte, de déblaiement de déneigement, et d'autre part des moyens pour aspirer. A l'arrière du châssis, on trouve différents équipements ou outils, comme par exemple des cuves réceptrices, des réservoirs contenant un fluide pour asperger, des enrouleurs-dérouleurs, des potences de lavage, des épandeurs de granulats de déneigement ou des bennes de transport.

La qualité du traitement de surface obtenue avec les véhicules connus est satisfaisante. Mais certains inconvénients importants subsistent et ne sont pas résolus.

En effet, les équipements sont en général prédéfinis en fonction des besoins de l'utilisateur et restent fixés à demeure sur le châssis, ce qui impose de prévoir un parc de plusieurs véhicules, avec au moins une unité par catégorie d'outils. La conséquence est qu'on ne peut pas dans tous les cas utiliser plusieurs équipements sur un seul et même châssis de base.

Il existe des matériels multifonctions, mais ils ne sont pas très intéressants et performants, car la dépose et le changement des équipements sont des opérations difficiles et compliquées.

Le problème à résoudre par notre invention est la pose et la dépose rapide et en toute sécurité des équipements sur ou à partir du châssis d'un même véhicule utilitaire.

On connaît de l'art antérieur différentes solutions qui sont censées résoudre ces problèmes.

Le document EP1710121 décrit un véhicule de voirie comportant une cabine sur la partie avant d'un châssis avec une suspension à hauteur variable, et au moins un outil positionné sur un support et prévu pour être monté sur la partie arrière du châssis. Des moyens d'accouplement sont également prévus pour solidariser les outils au châssis. Les moyens d'accouplement sont basculables vers l'arrière autour d'un axe au moyen d'un vérin disposé en position centrale dans la partie arrière du châssis.

Cette solution comporte des risques importants d'accident et d'accrochage car le véhicule doit reculer avec une extrême précision sous l'outil. De plus, il parait difficile de viser correctement le vérin de levage qui est solidaire du véhicule et qui doit venir s'encastrer avec précision sous le porteur. La répartition inégale des contraintes doit manifestement avoir pour conséquence des risques d'instabilité de l'ensemble.

Le document DE 3641634 décrit une machine de nettoyage avec des outils interchangeables. Ces outils sont montés sur un cadre mobile avec des moyens de fixation rapide.

Mais comme le cadre porte-outils ne repose pas sur le châssis du véhicule, il n'est possible de fixer sur le cadre que des outils de petite dimension. Ceci limite beaucoup l'intérêt de cette solution qui est incomplète.

Notre invention entend résoudre les inconvénients de l'art antérieur en réalisant des moyens d'accouplement d'équipements pour un véhicule utilitaire, agencés respectivement sur le châssis du véhicule et sur un chariot d'équipements qui est mobile.

Dans notre invention, les équipements sont placés sur un chariot de stockage autonome et distinct du véhicule. Ce chariot est muni de moyens d'accouplement qui vont coopérer avec des moyens correspondants en partie arrière du véhicule, pour réaliser la pose et la dépose des équipements, le véhicule étant à l'arrêt et seul le chariot se déplaçant.

Un exemple de réalisation de notre invention est décrit ci-dessous comme d'illustration, et par rapport aux dessins.

Dans ces dessins, on montre :
- figure 1 : vue latérale d'un équipement fixé sur son chariot mobile, face à la partie arrière d'un véhicule utilitaire à l'arrêt.
- figure 2 : vue latérale de l'équipement montré figure 1 pendant la phase d'accostage du chariot mobile au véhicule récepteur.
- figure 3 : vue latérale illustrant le verrouillage de l'équipement sur le véhicule récepteur, le chariot mobile étant en phase de retrait.
- figure 4 : vue arrière représentant les moyens de guidage prévus sur le véhicules récepteur, et
- figure 5 : vue de côté montrant une variante des moyens de liaison de l'équipement sur le chariot.
- figure 6 : vue latérale d'un équipement fixé sur le chariot mobile avec une variante de réalisation du basculement par un excentrique manuel
- figure 7 : vue latérale illustrant une variante de réalisation des moyens de liaison de l'équipement sur le chariot en cours de verrouillage sur le véhicule récepteur, le chariot mobile étant en phase de dépose.

Certains éléments qui ne sont pas propres à notre invention mais communs à tous les véhicules utilitaires ne sont pas montrés ici, par exemple la cabine de pilotage dans la partie avant du châssis et les moyens de nettoyages, d'aspiration et d'alimentation en fluides.

La partie arrière (G) du châssis du véhicule est destinée à recevoir un ou plusieurs équipements (B) nécessaires à l'accomplissement de divers travaux.

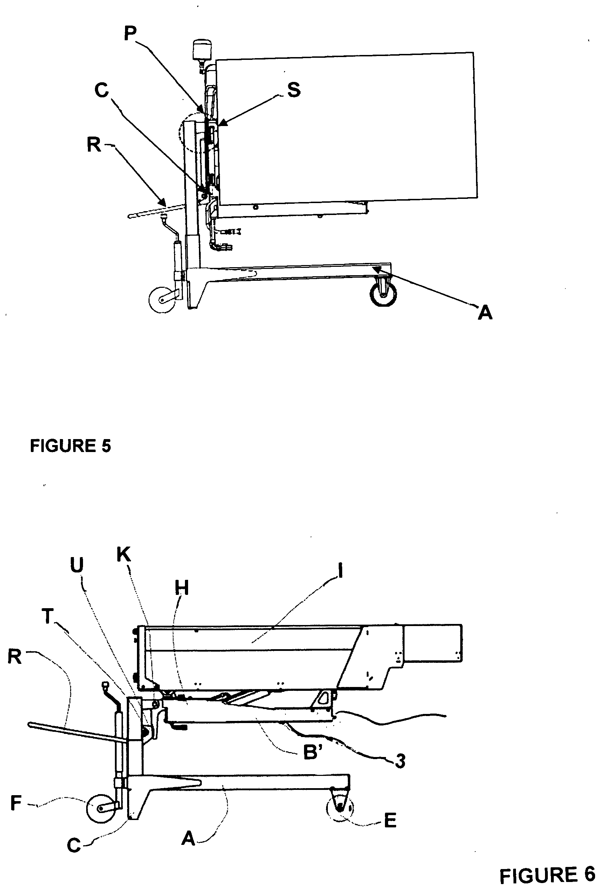

Dans la suite et sur les dessins joints, l'équipement (B) est une benne basculante. Mais on peut imaginer de remplacer cette benne par n'importe quel autre équipement (voir figure 5) sans que cela ne modifie les principes de base de notre invention.

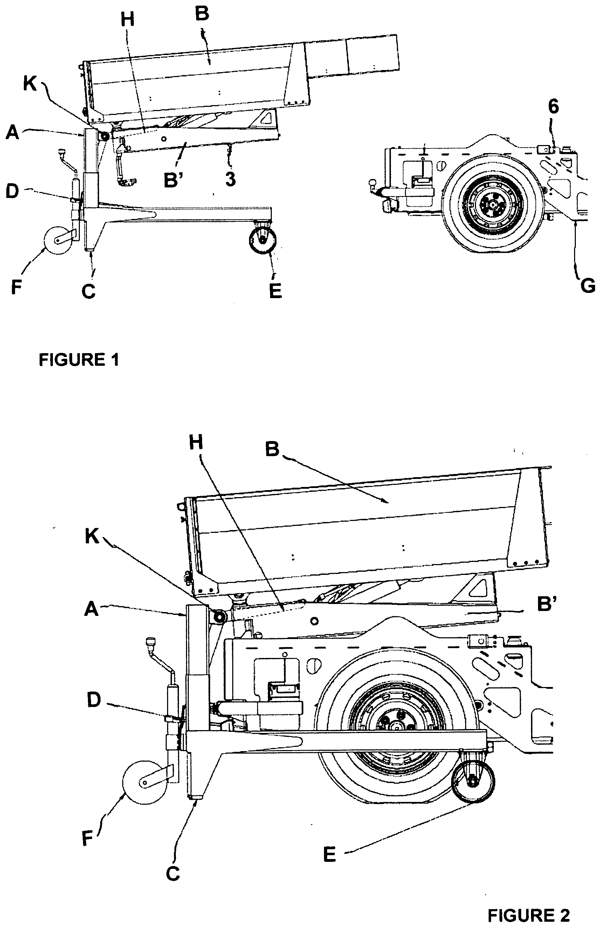

Sur la figure 1, on voit à gauche l'équipement (B) qui est monté sur un cadre (B') dont l'extrémité arrière est articulé à un chariot (A) récepteur, et à droite la partie arrière (G) du véhicule utilitaire sur lequel on veut placer l'équipement (B).

Le véhicule utilitaire est à l'arrêt. Le moteur est coupé et les moyens destinés à assurer son immobilisation, par exemple un frein d'appoint, sont activés. Le chariot (A) est dissocié du véhicule et constitue une unité distincte. La partie arrière du châssis (G) du véhicule utilitaire comporte des moyens de guidage prévus pour recevoir l'équipement (B) et le solidariser au châssis (G) du véhicule.

Les moyens de guidage sont constitués d'au moins un guide rectiligne.

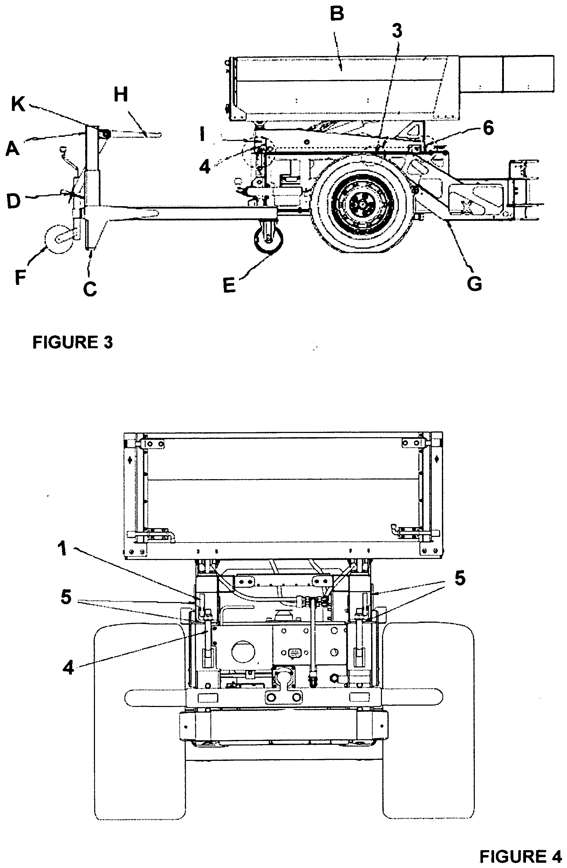

Dans l'exemple illustré sur la figure 4, ces moyens comportent deux rails ou guides (5) fixes et sensiblement rectilignes, disposés symétriquement, parallèlement à l'axe de déplacement du véhicule.

Bien entendu, il est parfaitement possible de ne prévoir qu'un seul guide, qui sera alors de préférence en position centrale, ou plus de deux.

D'après une variante intéressante, les moyens de guidage du châssis (G) peuvent être complétés par un arrêt de centrage (6). L'arrêt de centrage (6) peut être formé par exemple, par un ou des orifices ménagés en avant ou par une butée, et, entre ou de part et d'autres, des guides (5), pour former un engagement de type mâle-femelle avec des moyens correspondants situés sous le cadre (B') de l'équipement (B) et en assurer le centrage.

Sur la figure 2, on voit l'équipement (B) qui est fixé sur cadre (B') relié au chariot (A) qui sera déplacé manuellement par un opérateur jusqu'à l'emplacement de dépose de la partie arrière du châssis (G) du véhicule utilitaire. Dans ce but, le chariot mobile (A) est constitué d'une structure en L avec à l'avant deux roues fixes (E) et à l'arrière une roulette (F) permettant d'ajuster la hauteur du chariot, et comporte des moyens de désolidarisation par basculement de l'équipement (B), les moyens de désolidarisation étant composés d'un levier (H) articulé par une extrémité à la branche verticale de la structure en L du chariot (A), et dont l'extrémité libre s'étend sous la zone de réception de l'équipement (B).

Les moyens de blocage prévus sur le chariot (A) stockage pour amener l'équipement (B) en position en coopérant avec les moyens de guidage sur le châssis (G) du véhicule comportent une tige (1) actionnée depuis l'arrière de l'équipement.

Il est prévu un ou plusieurs plots de centrage (3) verticaux sous le cadre (B') de l'équipement (B), qui vont engager les arrêts de centrage (6) sur le châssis (G) du véhicule.

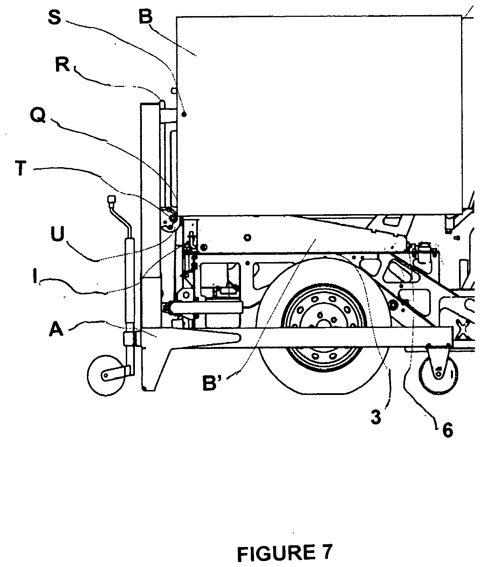

L'équipement (B) est fixé sur un cadre (B') horizontal. Le levier articulé (H), qui tourne autour d'un axe (K) réglée par une vis (D), ou comme représenté aux figures 6 et 7 en contact avec un excentrique solidaire d'une poignée (R), permet de soulever légèrement à l'avant l'équipement (B) pour procéder à sa pose ou à sa dépose. Le basculement du levier (H) du chariot (A) provoque le basculement de l'équipement (B) sur le châssis porteur du véhicule utilitaire, comme montré figure 2.

Le levier (H) en rotation autour de l'axe (K) permet de basculer l'équipement (B) en position comme montré figure 3.

Le positionnement latéral est réalisé très simplement grâce aux guides (5) sensiblement rectilignes placés sur le châssis (G).

Le positionnement longitudinal se fera grâce à l'arrêt (6) sur le châssis (G) du véhicule. Cet arrêt (6) réalise une seconde fonction, qui est de maintenir l'équipement (B) verticalement. Grâce à la tige (1) actionnée de l'arrière de l'équipement (B), on peut venir verrouiller l'ensemble sur le chariot.

De préférence, l'axe (K) sera perpendiculaire à l'axe longitudinal du chariot (A) et sera positionné à l'extrémité arrière de la structure en L dudit chariot. On peut ainsi effectuer un basculement vers l'arrière, ce qui facilite le retrait de l'équipement tout en limitant le volume nécessaire à l'opération.

Avantageusement, on peut prévoir un vérin (8) pour commander le mouvement de basculement de l'équipement (B), ou encore un excentrique manuel.

Pour l'arrimage de l'équipement (B) sur la partie arrière (G) du châssis du véhicule utilitaire, on pourra utiliser une vis de maintien à oeillet fixe (4) accrochée en arrière de l'équipement (B) et emprisonnant par la même occasion les barres (1).

Sur la figure 3, on voit également la position des différents éléments au début de la phase de dépose ou de pose.

Lorsque le véhicule utilitaire est immobilisé après avoir été placé en correspondance de l'équipement (B) à déposer ou à arrimer, on approche le chariot mobile (A), chargé de l'équipement si on réalise une pose, ou à vide si on effectue une dépose. L'opération est réalisée sans nécessité de déplacer le véhicule.

La mise en place et le retrait du chariot mobile (A) ne posent aucune difficulté, grâce à la présence des roues (E). Il suffit d'agir par l'arrière sur la tige (1) pour avancer ou reculer l'équipement (B) sur le chariot (A), et l'arrimer sur, ou le déposer du châssis (G).

Pour le stockage de l'équipement (B) sur le chariot mobile (A), la roulette arrière (F) est rétractée pour que tout l'équipement vienne reposer sur les deux pieds (C). Ainsi, on assure une sécurité de fonctionnement parfaite.

Les figures 6 à 7 montrent une variante de réalisation, dans laquelle l'équipement (B) est solidarisé au chariot (A) en position haute par un axe (S) amovible. Un levier (R) est relié à un excentrique (U) et pivote autour d'un axe (T). L'équipement (B) appuie en un point (Q) et le levier (R) permet de réaliser un basculement de l'équipement. Le levier (R) permet de faire facilement et commodément pivoter l'équipement (B) pour le poser ou le déposer sur le châssis (G) du véhicule.

Comme on le voit sur la figure 6, l'équipement (B) est stocké en l'état après dépose, c'est-à-dire sur le chariot mobile (A), dans l'attente d'une nouvelle utilisation sur le même véhicule ou sur tout autre véhicule équipé d'un accouplement selon l'invention.

Grâce aux roulettes (E et F), il sera éventuellement possible de procéder à des déplacements, par exemple pour ajuster la position de l'ensemble par rapport à un véhicule avant une nouvelle opération de pose, ou pour emmener l'équipement vers un autre véhicule a équiper, ou pour libérer un emplacement dans la zone de stockage.

Comme on le constate à travers la description qui est donnée ci-dessus, notre invention facilite grandement la dépose et la pose de tout type d'équipement sur un véhicule utilitaire. Le stockage des différents équipements est aussi facilité et optimisé. Comme c'est l'équipement qui va vers le véhicule, et non pas l'inverse, les difficultés d'accostage, les risques d'accrochages et d'accidents sont évités. Enfin, il n'est plus nécessaire de disposer d'un parc de véhicules différenciés en fonction des tâches à accomplir ou des équipements à utiliser.

## Revendications

1. Accouplement d'équipements sur le châssis d'un véhicule utilitaire à partir d'un chariot de stockage d'équipements distinct du véhicule, comportant des moyens de guidage sur le châssis (G) du véhicule utilitaire, et des moyens de blocage sur le cadre d'un équipement (B), ledit chariot (A) ayant une structure en L avec à l'avant deux roues fixes (E) et à l'arrière une roulette pour ajuster la hauteur du chariot, lesdits moyens de guidage étant constitués d'au moins un guide (5) sensiblement rectiligne et lesdits moyens de blocage étant constitués d'au moins une tige (1) actionnée depuis l'arrière de l'équipement (B),
**caractérisé en ce qu'**il associe un ou plusieurs plots de centrage (3) verticaux sous le cadre (B') de l'équipement (B), et un nombre correspondant d'arrêts de centrage (6) sur le châssis (G) du véhicule formés chacun par au moins une butée équipée d'un orifice ménagé en avant des guides (5), chaque plot (3) ou groupe de plots engageant un arrêt (6) pour assurer le centrage de l'équipement (B).

2. Accouplement selon la revendication 1, **caractérisé en ce que** le chariot (A) comporte des moyens de désolidarisation de l'équipement (B) composés d'un levier (H) articulé par une extrémité autour d'un axe (K) à la branche verticale de la structure en L du chariot (A), l'extrémité libre dudit levier (H) s'étendant sous la zone de réception de l'équipement (B), et dont le basculement provoque le basculement et la désolidarisation de l'équipement (B) sur le châssis du véhicule utilitaire.

3. Accouplement selon la revendication 2, **caractérisé en ce que** le basculement du levier articulé (H) est réalisé au moyen d'un vérin (8).

4. Accouplement selon la revendication 2, **caractérisé en ce que** le basculement du levier articulé (H) est réalisé au moyen d'un excentrique manuel.

5. Accouplement selon l'une des revendications précédentes, **caractérisé en ce que** l'équipement (B) est solidarisé au chariot (A) en position haute par un axe (S) amovible.

6. Accouplement selon l'une des revendications précédentes, **caractérisé en ce qu'**il comporte un levier (R) relié à un excentrique (U) et pivotant autour d'un axe (T) pour réaliser le basculement de l'équipement (B).

## Patentansprüche

1. Kupplung für Geräte am Fahrgestell eines Nutzfahrzeugs mit Hilfe eines vom Fahrzeug getrennten Gerätelagerwagens, die Führungsmittel auf dem Fahrgestell (G) des Nutzfahrzeugs umfasst, sowie Feststellmittel auf dem Rahmen eines Geräts (B), wobei dieser Wagen (A) eine L-förmige Struktur und an der Vorderseite zwei feste Räder (E) aufweist, und an der Rückseite eine Lenkrolle zum Einstellen der Höhe des Wagens,
wobei diese Führungsmittel aus mindestens einer wesentlich geradlinigen Führung (5) bestehen, und diese Feststellmittel aus mindestens einer von der Rückseite des Geräts (B) aus betätigten Stange (1) bestehen,
**dadurch gekennzeichnet, dass** sie einen oder mehrere vertikale Zentrierstifte (3) unter dem Rahmen (B') des Geräts (B) und eine entsprechende Zahl von Zentrierarretierungen (6) auf dem Fahrgestell (G) des Fahrzeugs miteinander verbindet, die jeweils durch mindestens einen mit einer vor den Führungen (5) eingerichteten Öffnung versehenen Anschlag gebildet werden, wobei jeder Stift (3) oder jede Gruppe von Stiften in eine Arretierung (6) eingreift, um für die Zentrierung des Geräts (B) zu sorgen.

2. Kupplung nach Anspruch 1, **dadurch gekennzeichnet, dass** der Wagen (A) Mittel zum Lösen des Geräts (B) umfasst, die aus einem Hebel (H) bestehen, der mit einem Ende um eine Achse (K) mit dem vertikalen Schenkel der L-förmigen Struktur des Wagens (A) gelenkig verbunden ist, wobei sich das freie Ende dieses Hebels (H) unter dem Aufnahmebereich des Geräts (B) erstreckt und dessen Kippen zum Kippen und zum Lösen des Geräts (B) vom Fahrgestell des Nutzfahrzeugs führt.

3. Kupplung nach Anspruch 2, **dadurch gekennzeichnet, dass** das Kippen des Gelenkhebels (H) mittels eines Zylinders (8) erfolgt.

4. Kupplung nach Anspruch 2, **dadurch gekennzeichnet, dass** das Kippen des Gelenkhebels (H) mittels eines manuellen Exzenters erfolgt.

5. Kupplung nach einem der vorstehenden Ansprüche, **dadurch gekennzeichnet, dass** das Gerät (B) mit dem Wagen (A) in der oberen Position durch eine Steckachse (S) verbunden ist.

6. Kupplung nach einem der vorstehenden Ansprüche, **dadurch gekennzeichnet, dass** sie einen mit einem Exzenter (U) verbundenen und sich um eine Achse (T) drehenden Hebel (R) umfasst, um das Kippen des Geräts (B) vorzunehmen.

## Claims

1. Equipment coupling on the chassis of a commercial vehicle based on an equipment storage carriage separate from the vehicle, comprising means for guiding the chassis (G) of the commercial vehicle, and locking means on the frame of a piece of equipment (B), said carriage (A) having an L-shaped structure with two fixed wheels at the front (E) and a castor at the rear to adjust the height of the carriage, said means of guidance being comprised of at least one substantially rectilinear guide (5) and said locking means being comprised of at least one rod (1) activated from the rear of the equipment (B), **characterized in that** it combines one or several vertical centering studs (3) under the frame (B') of the equipment (B), and a corresponding number of centering stops (6) on the frame (G) of the vehicle each formed by at least one stop equipped with an orifice arranged in front of the guides (5), each stud (3) or group of studs engaging a stop (6) to center the equipment (B).

2. Coupling according to claim 1, **characterized in that** the carriage (A) comprises means for detaching the equipment (B) comprised of a lever (H) articulated at one end around an axis (K) to the vertical branch of the L-shaped structure of the carriage (A), the free end of said lever (H) extending under the zone for receiving the equipment (B), and the tilting of which causes the tilting and uncoupling of the equipment (B) on the chassis of the commercial vehicle.

3. Coupling according to claim 2, **characterized in that** the tilting of the articulated lever (H) is performed by means of a valve (8).

4. Coupling according to claim 2, **characterized in that** the tilting of the articulated lever (H) is performed by means of a manual eccentric drive.

5. Coupling according to one of the preceding claims, **characterized in that** the equipment (B) is secured to the carriage (A) in the upper position by a removable pin (S).

6. Coupling according to one of the preceding claims, **characterized in that** it comprises a lever (R) connected to an eccentric drive (U) and pivoting around an axis (T) to perform the tilting of the equipment (B).
